# EUROPEAN PATENT SPECIFICATION

(11) **EP 4 303 984 B1**
(45) Date of publication and mention of the grant of the patent: **27.05.2026**
(21) Application number: 21932098.3
(22) Date of filing: 24.03.2021
(51) Int. Cl.: H01M 10/48, H01M 10/42, H01M 50/204, H01M 50/581

(54) **ENERGY STORAGE SYSTEM, BATTERY MONITORING METHOD, AND ENERGY STORAGE DEVICE**
ENERGIESPEICHERSYSTEM, BATTERIEÜBERWACHUNGSVERFAHREN UND ENERGIESPEICHERVORRICHTUNG
SYSTÈME DE STOCKAGE D'ÉNERGIE, PROCÉDÉ DE SURVEILLANCE DE BATTERIE ET DISPOSITIF DE STOCKAGE D'ÉNERGIE

(43) Date of publication of application: 10.01.2024
(73) Proprietor: Huawei Digital Power Technologies Co., Ltd., Shenzhen, Guangdong 518043 (CN)
(72) Inventor: WU, Zhipeng, Shenzhen, Guangdong 518129 (CN); MA, Hui, Shenzhen, Guangdong 518129 (CN)
(74) Representative: Gill Jennings & Every LLP
(86) International application number: PCT/CN2021/082526
(87) International publication number: WO 2022/198469

(56) References cited:
- CN-A- 106 450 530
- CN-A- 109 795 323
- CN-A- 110 068 768
- CN-A- 111 439 127
- CN-U- 211 045 641
- DE-A1- 102018 217 680
- GB-A- 2 566 308
- GB-B- 2 566 308
- US-A1- 2015 132 615

## Description

### TECHNICAL FIELD

This application relates to the field of battery technologies, and in particular, to an energy storage system, a battery monitoring method, and an energy storage device.

### BACKGROUND

Energy storage systems are applied in a wide range of scenarios, such as power generation, power transmission, power transformation, power distribution, and power consumption of a power system. A temperature of a cell of a battery module in the energy storage system directly affects charge and discharge efficiency of the energy storage system. Thermal runaway may cause a rapid decrease in a capacity and a service life of the cell, and even cause an explosion. This affects reliability and economical performance of the energy storage system.

In a conventional technology, each battery management system (BMS) has a plurality of negative temperature coefficient (NTC) temperature sensors. The NTC temperature sensor detects a temperature of a cell in real time, and transmits the detected temperature to a battery monitoring unit (BMU). After receiving a temperature signal, the BMU determines thermal runaway. When the received temperature signal reaches a preset thermal runaway temperature threshold, the BMU controls derating or shutdown of a current battery module.

However, controlling the current battery module by the BMU depends on precision and reliability of the NTC temperature sensor. As a result, the BMU is prone to protecting the battery module incorrectly.

GB2566308A discloses a battery management system for controlling charging currents to a plurality of cells of a battery based on the estimated temperature of those cells.

DE102018217680A1 discloses a method for determining the operational readiness of a battery of an electrically powered means of transportation composed of at least two modules.

US 2015/0132615 Al discloses a battery pack including a battery module, a plurality of temperature sensors, a temperature data generating unit, and a control unit.

### SUMMARY

This application provides an energy storage system, a battery monitoring method, and an energy storage device, to improve precision and stability of the energy storage system.

A first aspect of this application provides an energy storage system. The energy storage system includes a battery monitoring unit, a battery module, and a temperature sensor. The battery module includes at least two battery areas, the temperature sensor is disposed in each battery area, and each battery area includes at least one battery. The battery monitoring unit is configured to: receive a plurality of temperature signals, where each of the plurality of temperature signals comes from temperature sensors in different battery areas; when there is an abnormal temperature signal that reaches a first preset temperature threshold in the plurality of temperature signals, obtain a plurality of adjacent temperature signals, where the adjacent temperature signal is a temperature signal corresponding to a second battery area that is connected to a first battery area corresponding to the abnormal temperature signal, and there are one or more second battery areas; and when the adjacent temperature signal is greater than a second preset temperature threshold, reduce rated power of the battery module.

In the first aspect, batteries in the battery module are divided into a plurality of battery areas, and one temperature sensor is disposed in each battery area. The temperature sensor monitors a temperature signal of each battery area in real time, and sends the plurality of temperature signals to the battery monitoring unit. When the battery monitoring unit detects one abnormal temperature signal in the plurality of temperature signals, in other words, the abnormal temperature signal reaches the first preset temperature threshold, the battery monitoring unit may determine that there is a possibility of thermal runaway in the first battery area corresponding to the abnormal temperature signal. Then, the battery monitoring unit may obtain, from the plurality of temperature signals, the adjacent temperature signal of the second battery area that is connected to the first battery area. There may be one or more second battery areas. This is determined by a quantity of battery areas that are actually connected to the first battery area. When all the adjacent temperature signals of the second battery area are greater than the second preset temperature threshold that may be set based on the first preset temperature threshold, the battery monitoring unit may determine, based on a characteristic of thermal diffusion, that thermal runaway actually occurs in the first battery area, and therefore may reduce the rated power of the battery module. In this way, multi-dimensional monitoring is implemented, false reporting of the temperature signal is avoided, and the battery module is not abnormally derated or shut down because a specific temperature sensor is faulty. This improves precision and stability of the energy storage system.

In a possible implementation, the battery monitoring unit is configured to: when the adjacent temperature signal is less than the second preset temperature threshold, report fault information, where the fault information indicates that a temperature sensor corresponding to the abnormal temperature signal is faulty.

In this implementation, when detecting that all the adjacent temperature signals do not reach the second preset temperature threshold, the battery monitoring unit may determine that an actual temperature of the first battery area does not reach the first preset temperature threshold, and the abnormal temperature signal is an incorrect temperature signal, in other words, the temperature sensor in the first battery area is faulty. The battery monitoring unit may report the fault information indicating that the temperature sensor is faulty, to replace the faulty temperature sensor in time. This improves precision of the energy storage system.

In a possible implementation, the battery monitoring unit is configured to determine the first battery area corresponding to the abnormal temperature signal, determine the second battery area that is connected to the first battery area, and obtain the adjacent temperature signal based on a temperature sensor corresponding to the second battery area.

In this implementation, after determining the abnormal temperature signal, the battery monitoring unit may determine the temperature sensor that sends the abnormal temperature signal, correspondingly determine the first battery area in which the temperature sensor is located, and determine, based on distribution of the battery areas in the battery module, the second battery area that is connected to the first battery area. Then, the battery monitoring unit may determine, from the temperature signals sent by the temperature sensor, one or more adjacent temperature signals corresponding to one or more second battery areas.

In a possible implementation, the battery monitoring unit is configured to: when there is still a temperature signal that reaches the first preset temperature threshold in the plurality of temperature signals of the battery module whose rated power is reduced, shut down the battery module whose rated power is reduced.

In this implementation, when all the adjacent temperature signals of the second battery area are greater than the second preset temperature threshold, a battery area monitoring unit may directly shut down the battery module in addition to reducing the rated power of the battery module. Alternatively, the battery area monitoring unit may shut down the battery module if thermal runaway still occurs in one timer after the rated power of the battery module is reduced, to avoid damage to the battery module.

In a possible implementation, the second preset temperature threshold is obtained by performing simulation by the battery monitoring unit based on the abnormal temperature signal.

In this implementation, after determining the abnormal temperature signal, the battery monitoring unit may perform simulation on the abnormal temperature signal based on temperature diffusion, and determine, from a simulation result based on relative positions of the second battery area and the first battery area, the second preset temperature threshold after there is an abnormal temperature increment in the second battery area.

In a possible implementation, a temperature field model is disposed in the battery area. The temperature field model is used for simulation based on the abnormal temperature signal to obtain the second preset temperature threshold. The temperature field model is a simulation model including temperature gradients that are formed based on temperature diffusion. The temperature gradients are gradients distinguished by temperatures.

In this implementation, the battery monitoring unit may establish one temperature field model based on the temperature diffusion. The temperature field model is a simulation model including temperature gradients, and may reflect temperatures of different areas. When an abnormal temperature signal is input into the temperature field model, a diffusion temperature of the second battery area in a thermal runaway state may be output. The diffusion temperature is the second preset temperature threshold. Optionally, the temperature field model may further determine one abnormal increment based on the diffusion temperature and a temperature of the second battery area in a normal case. When a difference between the adjacent temperature signal and the temperature in the normal case is greater than the abnormal increment, the battery monitoring unit may reduce the rated power of the battery module or shut down the battery module.

In a possible implementation, the plurality of battery areas are equally sized areas.

In this implementation, the battery areas in the battery module are equally sized areas. This may facilitate the setting of the second preset temperature threshold based on temperature diffusion.

A second aspect of this application provides a battery monitoring method. The method includes: A battery monitoring unit receives a plurality of temperature signals. Each of the plurality of temperature signals comes from temperature sensors in different battery areas. The battery area is disposed in a battery module. Each battery area includes at least one battery. When there is an abnormal temperature signal that reaches a first preset temperature threshold in the plurality of temperature signals, the battery monitoring unit obtains a plurality of adjacent temperature signals. The adjacent temperature signal is a temperature signal corresponding to a second battery area that is connected to a first battery area corresponding to the abnormal temperature signal. There are one or more second battery areas. When the adjacent temperature signal is greater than a second preset temperature threshold, the battery monitoring unit reduces rated power of the battery module.

In a possible implementation, the method further includes: When the adjacent temperature signal is less than the second preset temperature threshold, the battery monitoring unit reports fault information. The fault information indicates that a temperature sensor corresponding to the abnormal temperature signal is faulty.

In a possible implementation, that the battery monitoring unit obtains a plurality of adjacent temperature signals in the foregoing steps includes: The battery monitoring unit determines the first battery area corresponding to the abnormal temperature signal. The battery monitoring unit determines the second battery area that is connected to the first battery area. The battery monitoring unit obtains the adjacent temperature signal based on a temperature sensor corresponding to the second battery area.

In a possible implementation, the method further includes: when there is still a temperature signal that reaches the first preset temperature threshold in the plurality of temperature signals of the battery module whose rated power is reduced, shutting down the battery module whose rated power is reduced.

In a possible implementation, the second preset temperature threshold is obtained by performing simulation by the battery monitoring unit based on the abnormal temperature signal.

In a possible implementation, a temperature field model is disposed in the battery area. The temperature field model is used for simulation based on the abnormal temperature signal to obtain the second preset temperature threshold. The temperature field model is a simulation model including temperature gradients that are formed based on temperature diffusion. The temperature gradients are gradients distinguished by temperatures.

In a possible implementation, the plurality of battery areas are equally sized areas.

A third aspect of this application provides an energy storage device, including the following units. A receiving unit is configured to receive a plurality of temperature signals. Each of the plurality of temperature signals comes from temperature sensors in different battery areas. The battery area is disposed in a battery module. Each battery area includes at least one battery. An obtaining unit is configured to: when there is an abnormal temperature signal that reaches a first preset temperature threshold in the plurality of temperature signals, obtain a plurality of adjacent temperature signals. The adjacent temperature signal is a temperature signal corresponding to a second battery area that is connected to a first battery area corresponding to the abnormal temperature signal. There are one or more second battery areas. A derating unit is configured to: when the adjacent temperature signal is greater than a second preset temperature threshold, reduce rated power of the battery module.

A fourth aspect of this application provides a computer device, including: a processor, a memory, and a communication interface. The processor is configured to execute instructions stored in the memory, to enable the computer device to perform the method according to any one of the second aspect or the optional implementations of the second aspect. The communication interface is configured to receive or send an indication. For specific details of the computer device according to the fourth aspect, refer to any one of the second aspect or the optional implementations of the second aspect. Details are not described herein again.

A fifth aspect of this application provides a computer-readable storage medium. The computer-readable storage medium stores a program. When a computer executes the program, the method according to any one of the second aspect or the optional implementations of the second aspect is performed.

A sixth aspect of this application provides a computer program product. When the computer program product is executed on a computer, the computer is enabled to perform the method according to any one of the second aspect or the optional implementations of the second aspect.

### BRIEF DESCRIPTION OF DRAWINGS

FIG. 1 is a schematic diagram of an architecture of a battery management system according to an embodiment of this application;
FIG. 2 is a schematic diagram of a structure of an energy storage system according to an embodiment of this application;
FIG. 3 is an embodiment of a battery monitoring method according to an embodiment of this application;
FIG. 4 is a schematic diagram of distribution of battery areas according to an embodiment of this application;
FIG. 5 is a schematic diagram of a temperature field model according to an embodiment of this application;
FIG. 6 is a schematic diagram of an embodiment of an energy storage device according to an embodiment of this application; and
FIG. 7 is a schematic diagram of a structure of a computer device according to an embodiment of this application.

### DESCRIPTION OF EMBODIMENTS

This application provides an energy storage system, a battery monitoring method, and an energy storage device, to improve precision and stability of the energy storage system.

The following describes embodiments of this application with reference to accompanying drawings. It is clear that the described embodiments are merely some but not all of embodiments of this application. A person of ordinary skill in the art may learn that, with technology development and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

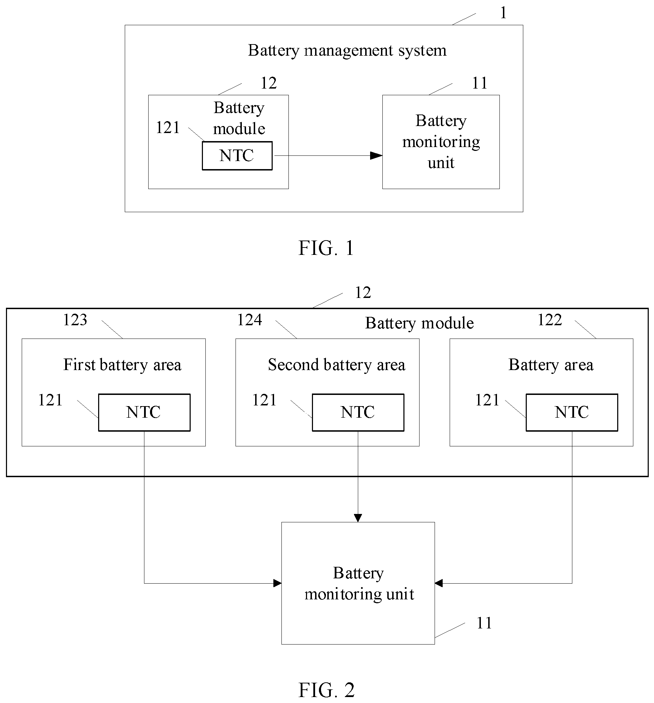

A battery management system (battery management system, BMS) is a system for managing a battery and usually has a function of measuring a battery voltage, to prevent or avoid an abnormal condition such as over-discharge, overcharge, and over-temperature of the battery. This can prolong a service life of the battery and monitor a battery status. Refer to FIG. 1. FIG. 1 is a schematic diagram of an architecture of a battery management system according to an embodiment of this application. The architecture includes a BMS 1, a battery monitoring unit (BMU) 11, and a battery module 12.

The battery module 12 is a modular battery module assembled by highly consistent cells that are strictly screened and assembled based on precision design. A negative temperature coefficient (NTC) temperature sensor 121 is further disposed in the battery module 12. The NTC temperature sensor 121 may monitor a temperature of the battery module 12.

The battery monitoring unit 11 may receive a temperature signal detected by the NTC temperature sensor 121, and then adjust use of the battery module based on the temperature signal, to avoid overheating of the battery module.

Each BMS usually has a plurality of NTC temperature sensors. The NTC temperature sensor detects a temperature of a cell in real time, and transmits the detected temperature to the BMU. After receiving a temperature signal, the BMU determines thermal runaway. When the received temperature signal reaches a preset temperature threshold, the BMU controls derating or shutdown of a current battery module or battery cluster. However, accuracy of temperature detection is closely related to reliability of the NTC temperature sensor. When the NTC temperature sensor is faulty, a temperature detected by the NTC temperature sensor deviates, and a temperature signal fed back to the BMU deviates greatly from actual signal data. As a result, the rated power of the battery cluster is incorrectly reduced or the battery cluster is incorrectly shut down, affecting economical performance of the battery management system.

To resolve the foregoing problem, an embodiment of this application provides an energy storage system. Refer to FIG. 2. The energy storage system includes a battery monitoring unit 11, a battery module 12, and a temperature sensor 121.

The battery module 12 includes at least two battery areas 122. The temperature sensor 121 is disposed in each battery area 122. Each battery area 122 includes at least one battery (not shown in the figure).

The battery monitoring unit 11 is configured to: receive a plurality of temperature signals, where each of the plurality of temperature signals comes from temperature sensors 121 in different battery areas 122; when there is an abnormal temperature signal that reaches a first preset temperature threshold in the plurality of temperature signals, obtain a plurality of adjacent temperature signals, where the adjacent temperature signal is a temperature signal corresponding to a second battery area 124 that is connected to a first battery area 123 corresponding to the abnormal temperature signal, and there are one or more second battery areas 124; and when the adjacent temperature signal is greater than a second preset temperature threshold, reduce rated power of the battery module 12.

Specifically, in this embodiment of this application, batteries in the battery module 12 are divided into a plurality of battery areas 122, and one temperature sensor 121 is disposed in each battery area 122. The temperature sensor 121 monitors a temperature signal of each battery area 122 in real time, and sends a plurality of temperature signals to the battery monitoring unit 11. When the battery monitoring unit 11 detects one abnormal temperature signal in the plurality of temperature signals, in other words, the abnormal temperature signal reaches the first preset temperature threshold, the battery monitoring unit 11 may determine that there is a possibility of thermal runaway in the first battery area 123 corresponding to the abnormal temperature signal. Then, the battery monitoring unit 11 may obtain, from the plurality of temperature signals, the adjacent temperature signal of the second battery area 124 that is connected to the first battery area 123. There may be one or more second battery areas 124. This is determined by a quantity of battery areas that are actually connected to the first battery area 123. When all the adjacent temperature signals of the second battery area 124 are greater than the second preset temperature threshold that may be set based on the first preset temperature threshold, the battery monitoring unit 11 may determine, based on a characteristic of thermal diffusion, that thermal runaway actually occurs in the first battery area 123, and therefore may reduce the rated power of the battery module 12. In this way, multi-dimensional monitoring is implemented, false reporting of the temperature signal is avoided, and the battery module is not abnormally derated or shut down because a specific temperature sensor is faulty. This improves precision and stability of the energy storage system.

Optionally, the battery monitoring unit 11 is configured to: when the adjacent temperature signal is less than the second preset temperature threshold, report fault information, where the fault information indicates that the temperature sensor 121 corresponding to the abnormal temperature signal is faulty.

Specifically, when detecting that all adjacent temperature signals do not reach the second preset temperature threshold, the battery monitoring unit 11 may determine that an actual temperature of the first battery area 123 does not reach the first preset temperature threshold, and the abnormal temperature signal is an incorrect temperature signal, in other words, the temperature sensor 121 in the first battery area 123 is faulty. The battery monitoring unit 11 may report the fault information indicating that the temperature sensor 121 is faulty, to replace the faulty temperature sensor 121 in time, and improve precision of the energy storage system.

Optionally, the battery monitoring unit 11 is configured to determine the first battery area 123 corresponding to the abnormal temperature signal, determine the second battery area 124 that is connected to the first battery area 123, and obtain the adjacent temperature signal based on the temperature sensor 121 corresponding to the second battery area 124.

Specifically, after determining the abnormal temperature signal, the battery monitoring unit 11 may determine the temperature sensor 121 that sends the abnormal temperature signal, correspondingly determine the first battery area 123 in which the temperature sensor 121 is located, and determine, based on distribution of the battery areas 122 in the battery module 12, the second battery area 124 that is connected to the first battery area 123. Then, the battery monitoring unit 11 may determine, from the temperature signal sent by the temperature sensor 121, one or more adjacent temperature signals corresponding to one or more second battery areas 124.

Optionally, the battery monitoring unit 11 is configured to: when there is still a temperature signal that reaches the first preset temperature threshold in the plurality of temperature signals of the battery module 12 whose rated power is reduced, shut down the battery module 12 whose rated power is reduced.

Specifically, when all the adjacent temperature signals of the second battery area 124 are greater than the second preset temperature threshold, a battery area 122 monitoring unit may directly shut down the battery module 12 in addition to reducing the rated power of the battery module 12. Alternatively, the battery area 122 monitoring unit may shut down the battery module if thermal runaway still occurs in one timer after the rated power of the battery module 12 is reduced, to avoid damage to the battery module.

Optionally, the second preset temperature threshold is obtained by performing simulation by the battery monitoring unit 11 based on the abnormal temperature signal.

Specifically, after determining the abnormal temperature signal, the battery monitoring unit 11 may perform simulation on the abnormal temperature signal based on temperature diffusion, and determine, from a simulation result based on relative positions of the second battery area 124 and the first battery area 123, the second preset temperature threshold after there is an abnormal temperature increment in the second battery area 124.

Optionally, a temperature field model is disposed in the battery area 122. The temperature field model is used for simulation based on the abnormal temperature signal to obtain the second preset temperature threshold. The temperature field model is a simulation model including temperature gradients that are formed based on the temperature diffusion. The temperature gradients are gradients distinguished by temperatures.

Specifically, the battery monitoring unit 11 may establish one temperature field model based on the temperature diffusion. The temperature field model is a simulation model including temperature gradients. The temperature field model may reflect temperatures of different areas. When an abnormal temperature signal is input into the temperature field model, a diffusion temperature of the second battery area 124 in a thermal runaway state may be output. The diffusion temperature is the second preset temperature threshold. Optionally, the temperature field model may further determine one abnormal increment based on the diffusion temperature and a temperature of the second battery area 124 in a normal case. When a difference between the adjacent temperature signal and the temperature in the normal case is greater than the abnormal increment, the battery monitoring unit 11 may reduce the rated power of the battery module 12 or shut down the battery module 12.

Optionally, the plurality of battery areas 122 are equally sized areas.

Specifically, the battery areas 122 in the battery module 12 are equally sized areas. This may facilitate the setting of the second preset temperature threshold based on the temperature diffusion.

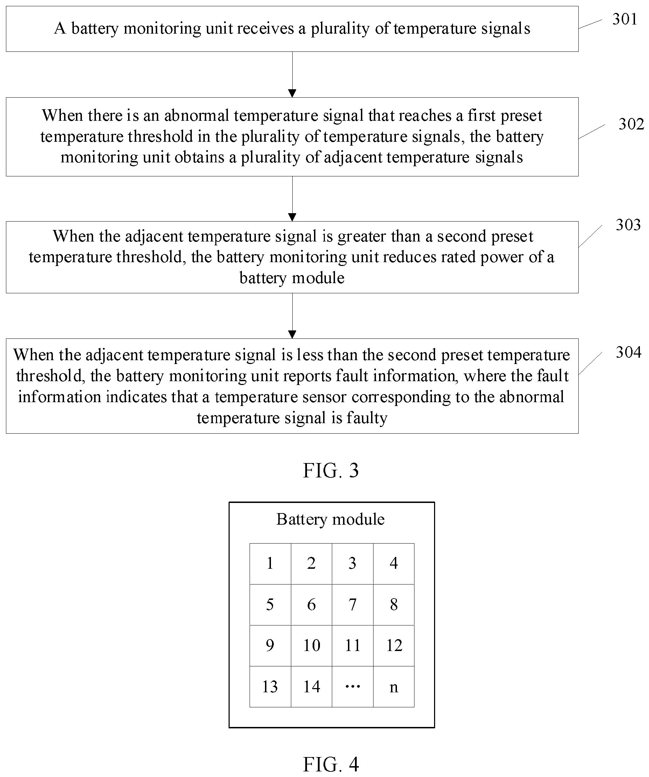

For the foregoing energy storage system, refer to a battery monitoring method provided in an embodiment of this application shown in FIG. 3. The method is described below.

301: A battery monitoring unit receives a plurality of temperature signals.

In this embodiment, batteries in a battery module are divided into a plurality of battery areas, and one temperature sensor is disposed in each battery area. The temperature sensor monitors a temperature signal of each battery area in real time, and sends a plurality of temperature signals corresponding to the plurality of battery areas to the battery monitoring unit. Correspondingly, the battery monitoring unit may receive the plurality of temperature signals.

Optionally, the plurality of battery areas are equally sized areas. The battery areas in the battery module are equally sized areas. This may facilitate setting of a monitoring range of the temperature sensor, and facilitate subsequent setting of a second preset temperature threshold based on temperature diffusion.

302: When there is an abnormal temperature signal that reaches a first preset temperature threshold in the plurality of temperature signals, the battery monitoring unit obtains a plurality of adjacent temperature signals.

In this embodiment, after receiving the plurality of temperature signals, the battery monitoring unit may determine a relationship between the plurality of temperature signals and the first preset temperature threshold. The first preset temperature threshold is preconfigured or updated in real time. When the battery monitoring unit detects one abnormal temperature signal in the plurality of temperature signals, in other words, the abnormal temperature signal reaches the first preset temperature threshold, the battery monitoring unit may determine that there is a possibility of thermal runaway in a first battery area in which the temperature sensor sending the abnormal temperature signal is located. The thermal runaway indicates that the first battery area may be damaged due to an excessively high temperature, and the battery module needs to be derated or shut down in time. To avoid derating or shutting down the battery module incorrectly,
the battery monitoring unit may further obtain one or more adjacent temperature signals of one or more second battery areas that are connected to the first battery area.

In an example, the battery monitoring unit determines the first battery area corresponding to the abnormal temperature signal. The battery monitoring unit determines the second battery area that is connected to the first battery area. The battery monitoring unit obtains the adjacent temperature signal based on a temperature sensor corresponding to the second battery area.

In this embodiment, after detecting the abnormal temperature signal, the battery monitoring unit needs to determine the first battery area that generates the abnormal temperature signal, and then determines the adjacent temperature signal of the second battery area from the plurality of temperature signals, to subsequently perform corresponding detection on the adjacent temperature signal.

In an example, for distribution of the battery areas in the battery module, refer to FIG. 4. The battery module is divided into battery areas 1, 2, ..., and n. The temperature sensor in each battery area transmits a temperature to the battery monitoring unit. When detecting an abnormal temperature signal, the battery monitoring unit may locate the first battery area corresponding to the abnormal temperature signal, for example, "6" in FIG. 4, in other words, corresponding second battery areas are {1, 2, 3, 5, 7, 9, 10, 11}.

303: When the adjacent temperature signal is greater than the second preset temperature threshold, the battery monitoring unit reduces the rated power of the battery module.

When the battery monitoring unit detects that a temperature (the adjacent temperature signal) of the second battery area is greater than the second preset temperature threshold, the battery monitoring unit may determine that thermal runaway actually occurs in the first battery area, affecting the temperature of the second battery area. The battery monitoring unit may reduce the rated power of the battery module, so that the battery module can reduce heating and restore to a normal temperature.

In an example, when there is still a temperature signal that reaches the first preset temperature threshold in the plurality of temperature signals of the battery module whose rated power is reduced, the battery module whose rated power is reduced is shut down. In this embodiment, after one timer, if thermal runaway still occurs in the battery module whose rated power is reduced, the battery module may be directly shut down to avoid damage to a battery.

The second preset temperature threshold may be determined based on the first preset temperature threshold in combination with thermal diffusion, or may be determined based on the abnormal temperature signal. This is not limited in this embodiment.

In an example, the second preset temperature threshold is obtained by performing simulation by the battery monitoring unit based on the abnormal temperature signal.

After determining the abnormal temperature signal, the battery monitoring unit may perform simulation on the abnormal temperature signal based on the temperature diffusion, and determine, from a simulation result based on relative positions of the second battery area and the first battery area, the second preset temperature threshold after there is an abnormal temperature increment in the second battery area.

In another example, a temperature field model is disposed in the battery area. The temperature field model is used for simulation based on the abnormal temperature signal to obtain the second preset temperature threshold. The temperature field model is a simulation model including temperature gradients that are formed based on the temperature diffusion. The temperature gradients are gradients distinguished by temperatures.

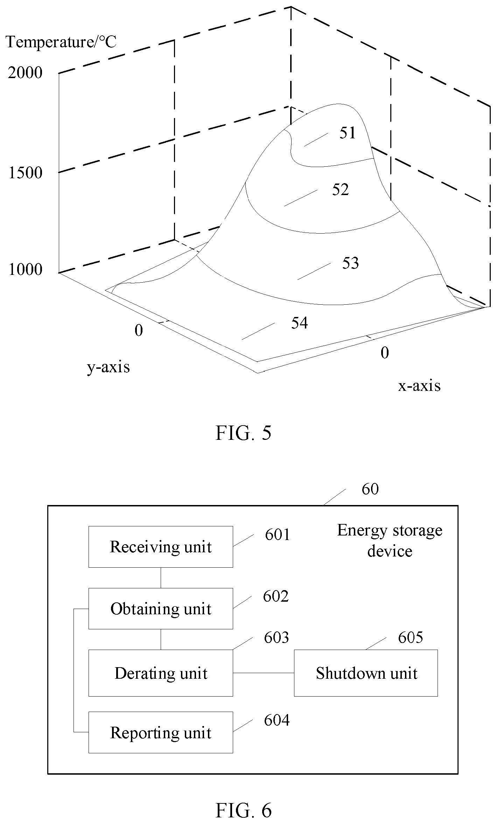

The battery monitoring unit may establish one temperature field model based on the temperature diffusion. The temperature field model is a simulation model including temperature gradients, and may reflect temperatures of different areas. When an abnormal temperature signal is input into the temperature field model, a diffusion temperature of the second battery area in a thermal runaway state may be output. The diffusion temperature is the second preset temperature threshold. Refer to a schematic diagram of a temperature field model shown in FIG. 5. The schematic diagram of the temperature field model is a three-dimensional diagram. A z-axis is a temperature coordinate axis in a unit of degree Celsius (°C). An x-axis and a y-axis are spatial position coordinate axes (specific coordinate values are not shown in the figure). A temperature layer 51 is an abnormal temperature. Temperature layers 52 to 53 are diffusion temperatures generated by the temperature field model. The temperature field model may determine a temperature layer at a corresponding position based on the relative positions of the second battery area and the first battery area. Optionally, the temperature field model may further determine one abnormal increment based on the diffusion temperature and a temperature of the second battery area in a normal case. When a difference between the adjacent temperature signal and the temperature in the normal case is greater than the abnormal increment, the battery monitoring unit derates or shuts down the battery module.

304: When the adjacent temperature signal is less than the second preset temperature threshold, the battery monitoring unit reports fault information. The fault information indicates that a temperature sensor corresponding to the abnormal temperature signal is faulty.

In this embodiment, when detecting that all adjacent temperature signals do not reach the second preset temperature threshold, the battery monitoring unit may determine that an actual temperature of the first battery area does not reach the first preset temperature threshold, and the abnormal temperature signal is an incorrect temperature signal, in other words, the temperature sensor in the first battery area is faulty. The battery monitoring unit may report the fault information indicating that the temperature sensor is faulty.

In this embodiment of this application, the battery monitoring unit determines the first battery area corresponding to the abnormal temperature signal that reaches the first preset temperature threshold. When the adjacent temperature signal of the second battery area that is connected to the first battery area is greater than the second preset temperature threshold, the rated power of the battery module is reduced. In this way, the battery module is not incorrectly protected because a temperature sensor is faulty. This improves precision and stability of the energy storage system.

The foregoing describes the battery monitoring method. The following describes an energy storage device in an embodiment of this application with reference to an accompanying drawing.

FIG. 6 is a schematic diagram of an embodiment of an energy storage device according to an embodiment of this application.

As shown in FIG. 6, an embodiment of this application provides an energy storage device. The energy storage device 60 includes the following units.

A receiving unit 601 is configured to receive a plurality of temperature signals. Each of the plurality of temperature signals comes from temperature sensors in different battery areas. The battery area is disposed in a battery module. Each battery area includes at least one battery.

An obtaining unit 602 is configured to: when there is an abnormal temperature signal that reaches a first preset temperature threshold in the plurality of temperature signals, obtain a plurality of adjacent temperature signals. The adjacent temperature signal is a temperature signal corresponding to a second battery area that is connected to a first battery area corresponding to the abnormal temperature signal. There are one or more second battery areas.

A derating unit 603 is configured to: when the adjacent temperature signal is greater than a second preset temperature threshold, reduce rated power of the battery module.

Optionally, the energy storage device 60 further includes a reporting unit 604. The reporting unit 604 is specifically configured to:
when the adjacent temperature signal is less than the second preset temperature threshold, report fault information, where the fault information indicates that a temperature sensor corresponding to the abnormal temperature signal is faulty.

Optionally, the obtaining unit 602 is specifically configured to: determine the first battery area corresponding to the abnormal temperature signal; determine the second battery area that is connected to the first battery area; and obtain the adjacent temperature signal based on a temperature sensor corresponding to the second battery area.

Optionally, the energy storage device 60 further includes a shutdown unit 605. The shutdown unit 605 is specifically configured to: when there is still a temperature signal that reaches the first preset temperature threshold in the plurality of temperature signals of the battery module whose rated power is reduced, shut down the battery module whose rated power is reduced.

Optionally, the second preset temperature threshold is obtained by performing simulation by the battery monitoring unit based on the abnormal temperature signal.

Optionally, a temperature field model is disposed in the battery area. The temperature field model is used for simulation based on the abnormal temperature signal to obtain the second preset temperature threshold. The temperature field model is a simulation model including temperature gradients that are formed based on temperature diffusion. The temperature gradients are gradients distinguished by temperatures.

Optionally, the plurality of battery areas are equally sized areas.

In this embodiment, the energy storage device 60 may perform operations performed by the battery monitoring unit in the embodiment shown in FIG. 3. Details are not described herein again.

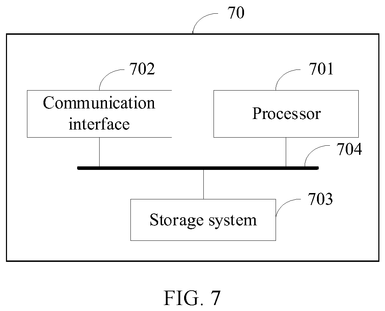

FIG. 7 is a schematic diagram of a possible logical structure of a computer device 70 according to an embodiment of this application. The computer device 70 includes a processor 701, a communication interface 702, a storage system 703, and a bus 704. The processor 701, the communication interface 702, and the storage system 703 are connected to each other through the bus 704. In this embodiment of this application, the processor 701 is configured to control and manage an action of the computer device 70. For example, the processor 701 is configured to perform steps performed by the battery monitoring unit in FIG. 3. The communication interface 702 is configured to support the computer device 70 to perform communication. The storage system 703 is configured to store program code and data of the computer device 70.

The processor 701 may be a central processing unit, a general-purpose processor, a digital signal processor, an application-specific integrated circuit, a field programmable gate array or another programmable logical device, a transistor logical device, a hardware component, or any combination thereof. The processor may implement or execute various example logical blocks, modules, and circuits described with reference to content disclosed in this application. Alternatively, the processor 701 may be a combination implementing a computing function, for example, a combination of one or more microprocessors or a combination of a digital signal processor and a microprocessor. The bus 704 may be a peripheral component interconnect (PCI) bus, an extended industry standard architecture (EISA) bus, or the like. Buses may be classified into an address bus, a data bus, a control bus, and the like. For ease of representation, only one bold line is used for representation in FIG. 7, but this does not mean that there is only one bus or only one type of bus.

The receiving unit 601 and the reporting unit 604 in the energy storage device 60 are equivalent to the communication interface 702 in the computer device 70. The obtaining unit 602, the derating unit 603, and the shutdown unit 605 in the energy storage device 60 may be equivalent to the processor 701.

The computer device 70 in this embodiment may correspond to the battery monitoring unit in FIG. 3. The processor 701 and the communication interface 702 in the computer device 70 may implement functions and/or various steps performed by the battery monitoring unit in FIG. 3. For brevity, details are not described herein again.

In another embodiment of this application, a computer-readable storage medium is further provided. The computer-readable storage medium stores computer-executable instructions. When a processor of a device executes the computer-executable instructions, the device performs the steps of the battery monitoring method performed by the battery monitoring unit in FIG. 3.

In another embodiment of this application, a computer program product is further provided. The computer program product includes computer-executable instructions, and the computer-executable instructions are stored in a computer-readable storage medium. When a processor of a device executes the computer-executable instructions, the device performs the steps of the battery monitoring method performed by the battery monitoring unit in FIG. 3.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

## Claims

1. An energy storage system, comprising a battery monitoring unit (11), a battery module (12), and a temperature sensor (121), wherein the battery module comprises at least two battery areas, the temperature sensor is disposed in each battery area, and each battery area comprises at least one battery; and
the battery monitoring unit is configured to:
receive (301) a plurality of temperature signals, wherein each of the plurality of temperature signals comes from temperature sensors in different battery areas;
when there is an abnormal temperature signal that reaches a first preset temperature threshold in the plurality of temperature signals, obtain (302) a plurality of adjacent temperature signals, wherein the adjacent temperature signal is a temperature signal corresponding to a second battery area that is connected to a first battery area corresponding to the abnormal temperature signal, and there are one or more second battery areas; and
when the adjacent temperature signal is greater than a second preset temperature threshold, reduce (303) rated power of the battery module.

2. The energy storage system according to claim 1, wherein
the battery monitoring unit is configured to: when the adjacent temperature signal is less than the second preset temperature threshold, report (304) fault information, wherein the fault information indicates that a temperature sensor corresponding to the abnormal temperature signal is faulty.

3. The energy storage system according to claim 1 or 2, wherein the battery monitoring unit is configured to:
determine the first battery area corresponding to the abnormal temperature signal, determine the second battery area that is connected to the first battery area, and obtain the adjacent temperature signal based on a temperature sensor corresponding to the second battery area.

4. The energy storage system according to claim 1 or 2, wherein the battery monitoring unit is configured to:
when there is still a temperature signal that reaches the first preset temperature threshold in the plurality of temperature signals of the battery module whose rated power is reduced, shut down the battery module whose rated power is reduced.

5. The energy storage system according to claim 1 or 2, wherein the second preset temperature threshold is obtained by performing simulation by the battery monitoring unit based on the abnormal temperature signal.

6. The energy storage system according to claim 5, wherein a temperature field model is disposed in the battery area, the temperature field model is used for simulation based on the abnormal temperature signal to obtain the second preset temperature threshold, the temperature field model is a simulation model comprising temperature gradients that are formed based on temperature diffusion, and the temperature gradients are gradients distinguished by temperatures.

7. The energy storage system according to claim 1 or 2, wherein the plurality of battery areas are equally sized areas.

8. A battery monitoring method, comprising:
receiving (301), by a battery monitoring unit, a plurality of temperature signals, wherein each of the plurality of temperature signals comes from temperature sensors in different battery areas, the battery area is disposed in a battery module, and each battery area comprises at least one battery;
when there is an abnormal temperature signal that reaches a first preset temperature threshold in the plurality of temperature signals, obtaining (302), by the battery monitoring unit, a plurality of adjacent temperature signals, wherein the adjacent temperature signal is a temperature signal corresponding to a second battery area that is connected to a first battery area corresponding to the abnormal temperature signal, and there are one or more second battery areas; and
when the adjacent temperature signal is greater than a second preset temperature threshold, reducing (303), by the battery monitoring unit, rated power of the battery module.

9. The battery monitoring method according to claim 8, wherein the method further comprises:
when the adjacent temperature signal is less than the second preset temperature threshold, reporting (304), by the battery monitoring unit, fault information, wherein the fault information indicates that a temperature sensor corresponding to the abnormal temperature signal is faulty.

10. The battery monitoring method according to claim 8 or 9, wherein the obtaining, by the battery monitoring unit, a plurality of adjacent temperature signals comprises:
determining, by the battery monitoring unit, the first battery area corresponding to the abnormal temperature signal;
determining, by the battery monitoring unit, the second battery area that is connected to the first battery area; and
obtaining, by the battery monitoring unit, the adjacent temperature signal based on a temperature sensor corresponding to the second battery area.

11. The battery monitoring method according to claim 8 or 9, wherein after the reducing, by the battery monitoring unit, rated power of the battery module, the method further comprises:
when there is still a temperature signal that reaches the first preset temperature threshold in the plurality of temperature signals of the battery module whose rated power is reduced, shutting down the battery module whose rated power is reduced.

12. The battery monitoring method according to claim 8 or 9, wherein the second preset temperature threshold is obtained by performing simulation by the battery monitoring unit based on the abnormal temperature signal.

13. The battery monitoring method according to claim 12, wherein a temperature field model is disposed in the battery area, the temperature field model is used for simulation based on the abnormal temperature signal, to obtain the second preset temperature threshold, the temperature field model is a simulation model comprising temperature gradients that are formed based on temperature diffusion, and the temperature gradients are gradients distinguished by temperatures.

14. The battery monitoring method according to claim 8 or 9, wherein the plurality of battery areas are equally sized areas.

## Patentansprüche

1. Energiespeichersystem, umfassend eine Batterieüberwachungseinheit (11), ein Batteriemodul (12) und einen Temperatursensor (121), wobei das Batteriemodul mindestens zwei Batteriebereiche umfasst, der Temperatursensor in jedem Batteriebereich angeordnet ist und jeder Batteriebereich mindestens eine Batterie umfasst; und
die Batterieüberwachungseinheit zu Folgendem konfiguriert ist:
Empfangen (301) einer Vielzahl von Temperatursignalen, wobei jedes der Vielzahl von Temperatursignalen von Temperatursensoren in verschiedenen Batteriebereichen kommt;
wenn es ein anormales Temperatursignal gibt, das einen ersten voreingestellten Temperaturschwellenwert in der Vielzahl von Temperatursignalen erreicht, Erhalten (302) einer Vielzahl von benachbarten Temperatursignalen, wobei das benachbarte Temperatursignal ein Temperatursignal ist, das einem zweiten Batteriebereich entspricht, der mit einem ersten Batteriebereich verbunden ist, der dem anormalen Temperatursignal entspricht, und es einen oder mehrere zweite Batteriebereiche gibt; und
wenn das benachbarte Temperatursignal größer als ein zweiter voreingestellter Temperaturschwellenwert ist, Reduzieren (303) einer Nennleistung des Batteriemoduls.

2. Energiespeichersystem nach Anspruch 1, wobei
die Batterieüberwachungseinheit zu Folgendem konfiguriert ist:
wenn das benachbarte Temperatursignal kleiner als der zweite voreingestellte Temperaturschwellenwert ist, Melden (304) von Fehlerinformationen, wobei die Fehlerinformationen anzeigen, dass ein Temperatursensor, der dem anormalen Temperatursignal entspricht, fehlerhaft ist.

3. Energiespeichersystem nach Anspruch 1 oder 2, wobei die Batterieüberwachungseinheit zu Folgendem konfiguriert ist:
Bestimmen des ersten Batteriebereichs, der dem anormalen Temperatursignal entspricht, Bestimmen des zweiten Batteriebereichs, der mit dem ersten Batteriebereich verbunden ist, und Erhalten des benachbarten Temperatursignals basierend auf einem Temperatursensor, der dem zweiten Batteriebereich entspricht.

4. Energiespeichersystem nach Anspruch 1 oder 2, wobei die Batterieüberwachungseinheit zu Folgendem konfiguriert ist:
wenn es immer noch ein Temperatursignal gibt, das den ersten voreingestellten Temperaturschwellenwert in der Vielzahl von Temperatursignalen des Batteriemoduls erreicht, dessen Nennleistung reduziert ist, Abschalten des Batteriemoduls, dessen Nennleistung reduziert ist.

5. Energiespeichersystem nach Anspruch 1 oder 2, wobei der zweite voreingestellte Temperaturschwellenwert durch Durchführen einer Simulation durch die Batterieüberwachungseinheit basierend auf dem anormalen Temperatursignal erhalten wird.

6. Energiespeichersystem nach Anspruch 5, wobei ein Temperaturfeldmodell in dem Batteriebereich angeordnet ist, das Temperaturfeldmodell zur Simulation basierend auf dem anormalen Temperatursignal verwendet wird, um den zweiten voreingestellten Temperaturschwellenwert zu erhalten, das Temperaturfeldmodell ein Simulationsmodell ist, umfassend Temperaturgradienten, die basierend auf Temperaturdiffusion ausgebildet sind, und die Temperaturgradienten durch Temperaturen abgegrenzte Gradienten sind.

7. Energiespeichersystem nach Anspruch 1 oder 2, wobei die Vielzahl von Batteriebereichen gleich große Bereiche sind.

8. Batterieüberwachungsverfahren, umfassend:
Empfangen (301) einer Vielzahl von Temperatursignalen durch eine Batterieüberwachungseinheit, wobei jedes der Vielzahl von Temperatursignalen von Temperatursensoren in verschiedenen Batteriebereichen kommt, der Batteriebereich in einem Batteriemodul angeordnet ist und jeder Batteriebereich mindestens eine Batterie umfasst;
wenn es ein anormales Temperatursignal gibt, das einen ersten voreingestellten Temperaturschwellenwert in der Vielzahl von Temperatursignalen erreicht, Erhalten (302) einer Vielzahl von benachbarten Temperatursignalen durch die Batterieüberwachungseinheit, wobei das benachbarte Temperatursignal ein Temperatursignal ist, das einem zweiten Batteriebereich entspricht, der mit einem ersten Batteriebereich verbunden ist, der dem anormalen Temperatursignal entspricht, und es einen oder mehrere zweite Batteriebereiche gibt; und
wenn das benachbarte Temperatursignal größer als ein zweiter voreingestellter Temperaturschwellenwert ist, Reduzieren (303) der Nennleistung des Batteriemoduls durch die Batterieüberwachungseinheit.

9. Batterieüberwachungsverfahren nach Anspruch 8, wobei das Verfahren ferner Folgendes umfasst:
wenn das benachbarte Temperatursignal kleiner als der zweite voreingestellte Temperaturschwellenwert ist, Melden (304) von Fehlerinformationen durch die Batterieüberwachungseinheit,
wobei die Fehlerinformationen anzeigen, dass ein Temperatursensor, der dem anormalen Temperatursignal entspricht, fehlerhaft ist.

10. Batterieüberwachungsverfahren nach Anspruch 8 oder 9, wobei das Erhalten einer Vielzahl von benachbarten Temperatursignalen durch die Batterieüberwachungseinheit Folgendes umfasst:
Bestimmen des ersten Batteriebereichs, der dem anormalen Temperatursignal entspricht, durch die Batterieüberwachungseinheit;
Bestimmen des zweiten Batteriebereichs, der mit dem ersten Batteriebereich verbunden ist, durch die Batterieüberwachungseinheit; und
Erhalten des benachbarten Temperatursignals durch die Batterieüberwachungseinheit basierend auf einem Temperatursensor, der dem zweiten Batteriebereich entspricht.

11. Batterieüberwachungsverfahren nach Anspruch 8 oder 9, wobei das Verfahren nach dem Reduzieren der Nennleistung des Batteriemoduls durch die Batterieüberwachungseinheit ferner Folgendes umfasst:
wenn es immer noch ein Temperatursignal gibt, das den ersten voreingestellten Temperaturschwellenwert in der Vielzahl von Temperatursignalen des Batteriemoduls erreicht, dessen Nennleistung reduziert ist, Abschalten des Batteriemoduls, dessen Nennleistung reduziert ist.

12. Batterieüberwachungsverfahren nach Anspruch 8 oder 9, wobei der zweite voreingestellte Temperaturschwellenwert durch Durchführen einer Simulation durch die Batterieüberwachungseinheit basierend auf dem anormalen Temperatursignal erhalten wird.

13. Batterieüberwachungsverfahren nach Anspruch 12, wobei ein Temperaturfeldmodell in dem Batteriebereich angeordnet ist, das Temperaturfeldmodell zur Simulation basierend auf dem anormalen Temperatursignal verwendet wird, um den zweiten voreingestellten Temperaturschwellenwert zu erhalten, das Temperaturfeldmodell ein Simulationsmodell ist, umfassend Temperaturgradienten, die basierend auf Temperaturdiffusion ausgebildet sind, und die Temperaturgradienten durch Temperaturen abgegrenzte Gradienten sind.

14. Batterieüberwachungsverfahren nach Anspruch 8 oder 9, wobei die Vielzahl von Batteriebereichen gleich große Bereiche sind.

## Revendications

1. Système de stockage d'énergie, comprenant une unité de surveillance de batterie (11), un module de batterie (12) et un capteur de température (121), dans lequel le module de batterie comprend au moins deux zones de batterie, le capteur de température est disposé dans chaque zone de batterie et chaque zone de batterie comprend au moins une batterie ; et
l'unité de surveillance de batterie est configurée pour :
recevoir (301) une pluralité de signaux de température, dans lequel chacun de la pluralité de signaux de température provient de capteurs de température situés dans différentes zones de batterie ;
lorsqu'il existe un signal de température anormal qui atteint un premier seuil de température prédéfini dans la pluralité de signaux de température, obtenir (302) une pluralité de signaux de température adjacents, dans lequel le signal de température adjacent est un signal de température correspondant à une seconde zone de batterie qui est reliée à une première zone de batterie correspondant au signal de température anormal, et il existe une ou plusieurs secondes zones de batterie ; et
lorsque le signal de température adjacent est supérieur à un second seuil de température prédéfini, réduire (303) la puissance nominale du module de batterie.

2. Système de stockage d'énergie selon la revendication 1, dans lequel
l'unité de surveillance de batterie est configurée pour :
lorsque le signal de température adjacent est inférieur au second seuil de température prédéfini, signaler (304) des informations de défaut, dans lequel les informations de défaut indiquent qu'un capteur de température correspondant au signal de température anormal est défectueux.

3. Système de stockage d'énergie selon la revendication 1 ou 2, dans lequel l'unité de surveillance de batterie est configurée pour :
déterminer la première zone de batterie correspondant au signal de température anormal, déterminer la seconde zone de batterie qui est reliée à la première zone de batterie et obtenir le signal de température adjacent sur la base d'un capteur de température correspondant à la seconde zone de batterie.

4. Système de stockage d'énergie selon la revendication 1 ou 2, dans lequel l'unité de surveillance de batterie est configurée pour :
lorsqu'il existe encore un signal de température qui atteint le premier seuil de température prédéfini dans la pluralité de signaux de température du module de batterie dont la puissance nominale est réduite, éteindre le module de batterie dont la puissance nominale est réduite.

5. Système de stockage d'énergie selon la revendication 1 ou 2, dans lequel le second seuil de température prédéfini est obtenu en réalisant une simulation par l'unité de surveillance de batterie sur la base du signal de température anormal.

6. Système de stockage d'énergie selon la revendication 5, dans lequel un modèle de champ de température est disposé dans la zone de batterie, le modèle de champ de température est utilisé pour la simulation sur la base du signal de température anormal pour obtenir le second seuil de température prédéfini, le modèle de champ de température est un modèle de simulation comprenant des gradients de température qui sont formés sur la base de la diffusion de température, et les gradients de température sont des gradients distingués par des températures.

7. Système de stockage d'énergie selon la revendication 1 ou 2, dans lequel la pluralité de zones de batterie sont des zones de taille égale.

8. Procédé de surveillance de batterie, comprenant :
la réception (301), par une unité de surveillance de batterie, d'une pluralité de signaux de température, dans lequel chacun de la pluralité de signaux de température provient de capteurs de température situés dans différentes zones de batterie, la zone de batterie est disposée dans un module de batterie, et chaque zone de batterie comprend au moins une batterie ;
lorsqu'il existe un signal de température anormal qui atteint un premier seuil de température prédéfini dans la pluralité de signaux de température, l'obtention (302), par l'unité de surveillance de batterie, d'une pluralité de signaux de température adjacents, dans lequel le signal de température adjacent est un signal de température correspondant à une seconde zone de batterie qui est reliée à une première zone de batterie correspondant au signal de température anormal, et il existe une ou plusieurs secondes zones de batterie ; et
lorsque le signal de température adjacent est supérieur à un second seuil de température prédéfini, la réduction (303), par l'unité de surveillance de batterie, de la puissance nominale du module de batterie.

9. Procédé de surveillance de batterie selon la revendication 8, dans lequel le procédé comprend également :
lorsque le signal de température adjacent est inférieur au second seuil de température prédéfini, le signalement (304), par l'unité de surveillance de batterie, d'informations de défaut,
dans lequel les informations de défaut indiquent qu'un capteur de température correspondant au signal de température anormal est défectueux.

10. Procédé de surveillance de batterie selon la revendication 8 ou 9, dans lequel l'obtention, par l'unité de surveillance de batterie, d'une pluralité de signaux de température adjacents comprend :
la détermination, par l'unité de surveillance de batterie, de la première zone de batterie correspondant au signal de température anormal ;
la détermination, par l'unité de surveillance de batterie, de la seconde zone de batterie qui est reliée à la première zone de batterie ; et
l'obtention, par l'unité de surveillance de batterie, du signal de température adjacent sur la base d'un capteur de température correspondant à la seconde zone de batterie.

11. Procédé de surveillance de batterie selon la revendication 8 ou 9, dans lequel après la réduction, par l'unité de surveillance de batterie, de la puissance nominale du module de batterie, le procédé comprend également :
lorsqu'il existe encore un signal de température qui atteint le premier seuil de température prédéfini dans la pluralité de signaux de température du module de batterie dont la puissance nominale est réduite, le fait d'éteindre le module de batterie dont la puissance nominale est réduite.

12. Procédé de surveillance de batterie selon la revendication 8 ou 9, dans lequel le second seuil de température prédéfini est obtenu en réalisant une simulation par l'unité de surveillance de batterie sur la base du signal de température anormal.

13. Procédé de surveillance de batterie selon la revendication 12, dans lequel un modèle de champ de température est disposé dans la zone de batterie, le modèle de champ de température est utilisé pour la simulation sur la base du signal de température anormal pour obtenir le second seuil de température prédéfini, le modèle de champ de température est un modèle de simulation comprenant des gradients de température qui sont formés sur la base de la diffusion de température, et les gradients de température sont des gradients distingués par des températures.

14. Procédé de surveillance de batterie selon la revendication 8 ou 9, dans lequel la pluralité de zones de batterie sont des zones de taille égale.
